(19) Europäisches Patentamt
European Patent Office
Office européen des brevets

(11) **EP 3 599 078 A1**

(12) **EUROPEAN PATENT APPLICATION**

(43) Date of publication:
**29.01.2020 Bulletin 2020/05**

(21) Application number: **18199478.1**

(22) Date of filing: **10.10.2018**

(51) Int Cl.:
**B29C 64/135** (2017.01)    **B29C 64/393** (2017.01)
**B29C 64/124** (2017.01)    **B33Y 10/00** (2015.01)
**B33Y 50/02** (2015.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2018   CN 201810843495**

(71) Applicants:
• **XYZprinting, Inc.**
**New Taipei City 22201 (TW)**

• **Kinpo Electronics, Inc.**
**New Taipei City 22201 (TW)**

(72) Inventor: **CHEN, Peng-Yang**
**New Taipei City 22201 (TW)**

(74) Representative: **2K Patentanwälte Blasberg
Kewitz & Reichel
Partnerschaft mbB
Schumannstrasse 27
60325 Frankfurt am Main (DE)**

(54)    **SLA-TYPE 3D PRINTER AND PRINTING METHOD WITH LIGHT SOURCE COMPENSATION**

(57)    An SLA-type 3D printer (1) includes a processor (10), a laser scanning unit (LSU,13), a power detecting unit (14) and a printing platform (12). The power detecting unit (14) is configured to detect an output power value (Pxl-Px5) of each of a plurality of areas (41-45) upon the printing platform (12) provided by the LSU (13). The processor (10) is configured to calculate a gain needed by each area (41-45) according to the output power value of a working area of each of the plurality of areas (41-45).

The processor (10) further obtains a standard irradiation amount corresponding to the currently adopted material (2), and calculates a compensated irradiation amount of each area (41-45) according to the standard irradiation amount and each area's gain. Next, the processor (10) is able to control the LSU (13) to perform scanning on each area (41-45) of the printing platform (12) according to each area's compensated irradiation amount for printing a 3D object thereon.

FIG.2

EP 3 599 078 A1

**Description**

BACKGROUND OF THE INVENTION

1.Technical Field

The technical field relates to a 3D printer and a printing method, and specifically relates to an SLA-type 3D printing, and a printing method with light source compensation.

2.Description of Related Art

According to the maturity of 3D printing technology, and the narrowed volume and reduced price of the 3D printers, the utilization of the 3D printers has become popular these days.

There are many different types of 3D printers provided in the market, wherein the stereolithography (SLA) type 3D printer is the most attractive one because its end result is more accurate and it is able to print multiple objects at a time.

A laser scanning unit is usually included in a SLA-type 3D printer. The 3D printer obtains 3D images according to a slicing process, and then controls the laser scanning unit to emit laser beam correspondingly onto the surface of the material for curing the material, so as to form a 3D object with a shape corresponding to the 3D images.

The laser beam emitted from the laser scanning unit may hit different areas on a printing platform after being refracted. However, the laser beam may provide different degrees of power due to different refracted angles or emitting distances when it hits different areas upon the same printing platform (generally, an area closer to a refracted point may have a stronger power after being hit by the laser beam, and an area farther away from the refracted point may have a weaker power after being hit by the laser beam).

As discussed, if the 3D printer controls the laser scanning unit to emit laser beam onto the material set upon the surface of the printing platform and every areas of the printing platform are being emitted by the laser beam for same amount (or being emitted for same time length), it may then cause different curing degrees for each place of the material.

Besides, the areas which are farther away from the refracted point may have weaker power after being hit by the laser beam, and the power may be too weak to cure the material. In the end, part of the areas of the printing platform may be unqualified for printing and causes hardware wasting (for example, the accumulated length of all areas upon the printing platform that can be covered by the laser scanning unit may be 14 cm, but only 10 cm of them that are close to the refracted point have enough power for curing the material and qualified for printing).

SUMMARY OF THE INVENTION

The disclosure is directed to an SLA-type 3D printing and a printing method with light source compensation, which may compensate some of the areas upon a printing platform that cannot be satisfied by a laser scanning unit.

In one of the exemplary embodiments, the SLA-type 3D printer mainly includes:

a tank, configured to contain a material;
a printing platform, being controlled to immerse into the material and logically divided into multiple areas;
a laser scanning unit, arranged upon the tank, configured to provide a line-light-source for irradiating on the multiple areas upon the printing platform;
a power detecting unit, configured to detect an output power value of each of the areas provided by the laser scanning unit; and
a processor electrically connected with the printing platform, the laser scanning unit and the power detecting unit, configured to calculate a gain of each area according to the output power value of a working area of the multiple areas and the output power value of multiple extending areas around the working area of the multiple areas, to obtain a standard irradiation amount corresponding to the material, and to calculate a compensated irradiation amount of each area according to the standard irradiation amount and each area's gain;
wherein, the processor is configured to control the laser scanning unit to irradiate on each of the areas upon the printing platform according to the compensated irradiation amount of each area for curing the material and transforming the material into a corresponding slicing object.

In one of the exemplary embodiments, the printing method main includes the following steps:

a) detecting an output power value of each of the areas upon the printing platform provided by the laser scanning unit;
b) calculating a gain of each area according to the output power value of a working area of the multiple areas and the output power values of multiple extending areas around the working area of the multiple areas by the processor;

c) obtaining a standard irradiation amount corresponding to the material;

d) calculating a compensated irradiation amount of each area according to the standard irradiation amount and the gain of each area by the processor; and

e) controlling the laser scanning unit to irradiate on each of the areas upon the printing platform according to each area's compensated irradiation amount by the processor for curing the material and transforming the material into a corresponding slicing object.

In comparison with related art, the present invention may perform power compensation for the laser scanning unit of the 3D printer, which may solve the problem that each area upon the printing platform obtains different powers from being hit by laser beam, therefore, the accurate of the 3D object printed by the 3D printer may be further improved. Moreover, the present invention may compensate the areas upon the printing platform which have weaker power after being hit by laser beam, so the effective irradiating range of the laser scanning unit may be appropriately expanded.

DESCRIPTION OF THE DRAWINGS

FIG. 1 is a schematic diagram of a 3D printer of the present invention.
FIG. 2 is a block diagram of the 3D printer of the present invention.
FIG. 3 is a top view of the 3D printer of the present invention.
FIG. 4 is diagram showing the power distribution of the present invention.
FIG. 5 is a printing flowchart of the present invention.
FIG. 6 is a laser emitting flowchart of the present invention.

DETAILED DESCRIPTION OF THE INVENTION

In cooperation with the attached drawings, the technical contents and detailed description of the present invention are described thereinafter according to multiple embodiments, being not used to limit its executing scope. Any equivalent variation and modification made according to appended claims is all covered by the claims claimed by the present invention.

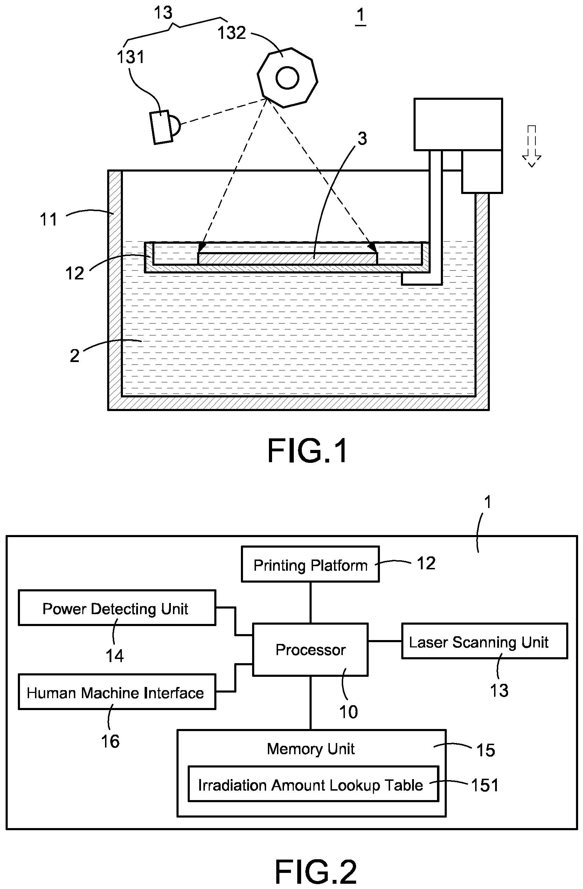

FIG. 1 is a schematic diagram of a 3D printer of the present invention, FIG. 2 is a block diagram of the 3D printer of the present invention. The present invention discloses a stereolithography (SLA) type 3D printer (referred to as the printer 1 hereinafter), the printer 1 mainly includes a processor 10, a tank 11, a printing platform 12, a laser scanning unit (LSU) 13 and a power detecting unit 14, wherein the processor 10 is electrically connected with the printing platform 12, the LSU 13 and the power detecting unit 14 and controls the printing platform 12, the LSU 13 and the power detecting unit 14.

In the embodiment as shown in FIG. 2, the processor 10, the power detecting unit 14 and the LSU 13 are all individual units, however, the power detecting unit 14 may also be integrated with the processor 10 and/or the LSU 13 in another embodiment, not only limited in what is shown in FIG. 2.

In the embodiment as shown in FIG. 1, the printer 1 is a top-up SLA-type 3D printer, however, if the necessary conditions are all met, a bottom-up SLA-type 3D printer may also be adopted by the present invention, not limited to what is shown in FIG. 1.

For the sake of understanding, a top-up SLA-type 3D printer will be taken as an example for describing in the following.

As shown in FIG. 1, the LSU 13 is arranged on top of the printer 1, the tank 11 is arranged beneath the LSU 13. The tank 11 is used to contain the material 2 needed for printing, whereby the material 2 in the disclosure may be any kind of materials which may be cured after being hit by laser beam, such as resin, but not limited thereto.

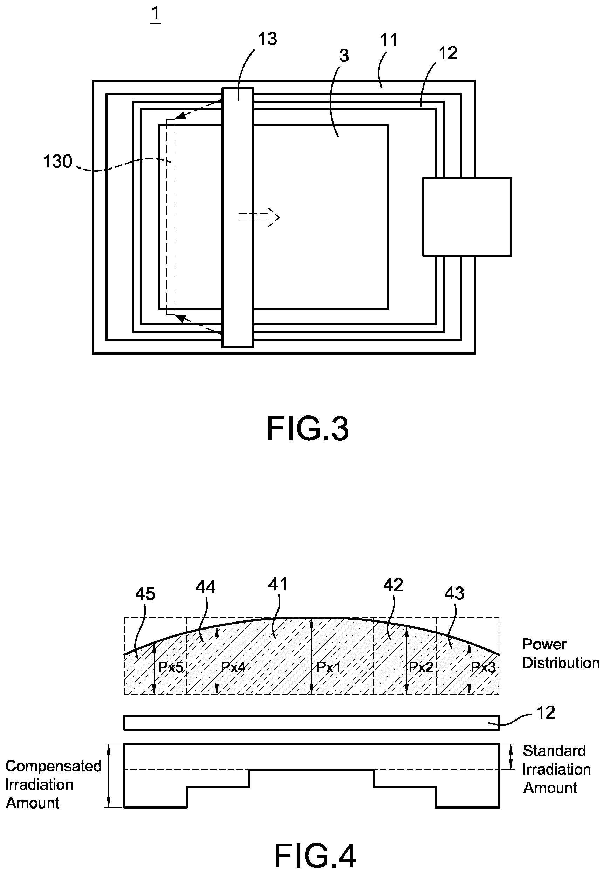

As shown in FIG. 1, the LSU 13 at least includes a laser light source 131 and a galvanometer 132. In this embodiment, the galvanometer 132 is a polygon mirror which is arranged on a central position upon the printing platform 12. The LSU 131 is arranged next to the galvanometer 132 and constantly emitting laser beam toward the galvanometer 132. According to the rotation of the galvanometer 132, the laser beam emitted from the LSU 13 may be refracted onto different areas upon the printing platform 12, therefore, the point-light-source originally emitted from the laser light source 131 may be transformed into a line-light-source, so as to hit multiple areas (such as the areas 41-45 shown in FIG. 4) upon the printing platform 12 at the same time by way of the line-light-source.

The aforementioned printing platform 12 is arranged beneath the LSU 13, and the printing platform 12 may be controlled by the processor 10 to immerse into the material 2 contained in the tank 11. When the LSU 13 emits laser beam toward the tank 11, the material 2 in the tank 11 which directly hit by the laser beam will be cured. When performing printing, the processor 10 controls the LSU 13 to scan the surface of the printing platform 12 (i.e., move or rotate the LSU 13 while the LSU 13 performs the so called line-light-source emitting, so as to achieve the curing approach by scanning toward a direction (such as X axis) using the line-light-source) for curing the material 2 distributed on the surface of the printing platform 12. Therefore, the material 2 which is cured may be transformed into a slicing object with the corresponding shape.

The scanning action of the LSU 13 described above is just a common technical approach in this field, detailed description is therefore omitted.

As mentioned above, the laser beam emitted from the laser light source 131 is refracted to hit a plurality of areas upon the printing platform 12 by way of the rotation of the galvanometer 132. As a result, each of the areas may have different degrees of power after being hit by the laser beam (i.e., the LSU 13 may provide different power distribution on each of the areas).

The power detecting unit 14 is used to detect the LSU 13, so as to measure the output power value of each area provided by the LSU 13.

In one embodiment, the printer 1 may logically divide the printing platform 12 into the multiple areas according to one or more parameters (for example, the strength of the laser light source 131, the rotatable angle of the galvanometer 132, etc.), and then detects the output power value of each area that may obtain from the LSU 13 by the power detecting unit 14. In another embodiment, the printer 1 may first control the power detecting unit 14 to detect the output power value of each position (such as each point) upon the printing platform 12, and regards multiple positions having the identical or similar output power values as an united area. However, the above descriptions are only exemplary examples of the present invention, not intended to limit the scope thereto.

In the embodiment, the power detecting unit 14 may detect the power values of all positions of an area, use these power values to calculate an average power value of this area, and then regard the calculated average power value as the output power value of this area. As mentioned above, the multiple positions of an united area may have identical or similar power values. In another embodiment, the power detecting unit 14 may detect the power value of a random position of an area, and regard this power value directly as the output power value of this area. In a further embodiment, the power detecting unit 14 may perform a weighted calculation to the power value or the average power value, so as to calculate the output power value of this area. However, the above descriptions are only exemplary examples of the present invention, not intended to limit the claimed scope thereto.

As mentioned above, the LSU 13 may provide different output power values to each of the areas upon the printing platform 12. One of the main technical features of the present invention is that the processor 10 can compensate the one or more areas having weaker or insufficient output power value (for example, may increase the eventual irradiation amount or irradiation time length from the LSU 13 to these areas), so as to balance the total output power eventually provided by the LSU 13 to each of the areas. As a result, the accurate of a printed 3D object may be improved, and the effective working area of the LSU 13 may be expanded.

In particular, the printer 1 may be marked with an effective working area of the LSU 13 when the printer 1 is first manufactured. The working area indicates a specific range calculated from a central line (such as the arranged position of the galvanometer 132) toward to sides, and the strength of the power provided by the LSU 13 within the working area is guaranteed. On the other hand, the power provided by the LSU 13 within extending areas around the working area may be a little bit insufficient and not guaranteed, so the material 2 located upon the printing platform 12 corresponding to the extending areas may have the problem in being cured.

For solving the above problem and achieving the technical effect, the processor 10 controls the power detecting unit 14 to detect the output power value (such as the average power value of the entire area, or the power value of an arbitrary position of the area) of every area (including the working area and the one or more extending areas) upon the printing platform 12 provided by the LSU 13. Next, the processor 10 may calculate a gain needed by each of the areas according to the output power value of the working area and the output power values of all the extending areas. In the embodiment, the gain needed by each area is respectively larger than or equal to "1".

Next, the processor 10 obtains a standard irradiation amount corresponding to the material 2 currently used by the printer 1 (i.e., the material 2 currently contained in the tank 11). Finally, the processor 10 calculates a compensated irradiation amount of each area based on the standard irradiation amount and the gain of each area. In the embodiment, the compensated irradiation amount of each area is respectively larger than or equal to the standard irradiation amount.

The aforementioned standard irradiation amount is pre-tested by the manufacturer of the printer 1, it represents an amount that the LSU 13 of the printer 1 needs to irradiate directly to the material 2 under the output power value of the working area which is able to cure the material 2 and not causes an over curing effect. Because different materials may have different characteristics, and different maerials may have different standard irradiation amounts as well. In another embodiment, the standard irradiation amount may be substituted by a standard irradiation time length (i.e., the irradiation amount of the LSU 13 is flexible, but the total irradiation time length is fixed). General speaking, the aforementioned output power may be smaller than or equal to a maximum output power of the LSU 13, and the value of the output power may be decided according to the curing power needed by the material 2 currently used by the printer 1.

As discussed, part of specific areas upon the printing platform 12 (such as the extending areas) can only obtain weaker output power from the LSU 13, even if these specific areas are being emitted by the LSU 13 for the standard irradiation amount, the material 2 upon these specific areas may still not be completely cured yet. In order to make up for this problem, the present embodiment uses the procesoor 10 to calculate a compensated irradiation amount for each of the specific areas based on the aforementioned gain of each of the specific areas. When performing scanning by the LSU 13, the processor 10 may ensure that each of the specific areas is respectively emitted for its own compensated irradiation amount. Therefore, these specific areas can all be guaranteed in completely curing the material 2 located upon without causing an over curing effect.

In should be mentioned that the output power of the working area obtained from the LSB 13 does not have a power attenuation problem, in such scenario, the gain needed by the working area will be "1". In other word, the calculated compensated irradiation amount of the working area upon the printing platform 12 will be equal to the standard irradiation amount.

After the compensated irradiation amounts are completely calculated, the processor 10 may control the LSU 13 to irradiate toward each area upon the printing platform 12 according to each compensated irradiation amount of each area, so as to cure the material 2 upon the printing platform 12 and build a slicing object with a corresponding shape. The slicing object is just the common issue of 3D printing field, detailed description is therefore omitted.

Please now refer to FIG. 3 and FIG. 4, FIG. 3 is a top view of the 3D printer of the present invention, FIG. 4 is diagram showing the power distribution of the present invention. As shown in FIG. 3, the LSU 13 irradiates toward the tank 11 by way of the line-light-source implemented by the laser light source 131 and the galvanometer 132, it first completely cures the material 2 upon one emitting position 130 (i.e., emits laser beam to each area of the emitting position 130 (such as a first line) for each compensated irradiation amount of each area), then moves or rotates for aiming at next emitting position 130 (such as a second line next to the first line) for curing thereto, so as to achieve the effect of scanning. In the embodiment of FIG. 3, the emitting position 130 of the LSU 13 is slowly moved from one side of the tank 11 toward another side of the tank 11, so the material 2 upon these emitting positions 130 may be cured and eventually transformed into a slicing object 3 with a corresponding shape.

In one embodiment, the processor 10 controls the power detecting unit 14 to detect the power distribution of each area upon the printing platform 12 provided by the LSU 13, and separates these positions into multiple areas (including the working area and the extending areas) according to the power distribution. In the embodiment of FIG. 4, a first area 41, a second area 42, a third area 43, a fourth area 44 and a fifth area 45 are taken as an example, wherein the first area 41 may obtain a first power (Px1), the second area 42 may obtain a second power (Px2), the third area 43 may obtain a third power (Px3), the fourth area 44 may obtain a fourth power (Px4) and the fifth area 45 may obtain a fifth power (Px5). In this embodiment, the first power Px1 of the first area 41 does not have the power attenuation effect, which means the processor 10 may consider the first area 41 as a working area of the LSU 13 which is guaranteed.

In another embodiment, the processor 10 may logically divide the whole printing platform 12 into multiple areas (such as the first area 41 to the fifth area 45 shown in FIG. 4) according to multiple parameters such as the strength of the laser light source 131, the rotatable angle of the galvanometer 132, etc., and calculates the output power value of each of the areas 41-45. However, the above descriptions are only exemplary embodiments of the present invention, not limited thereto.

After obtaining the output power values of the areas 41-45 and confirming the output power value of the working area, the processor 10 may calculate the gain needed by each of the areas 41-45. Furthermore, the processor 10 may calculate the compensated irradiation amount of each area according to the standard irradiation amount and the gain needed by each area.

As shown in FIG. 4, the first area 41 is the working area of the LSU 13 without the power attenuation effect, so the gain of the first area 41 will be "1" and the compensated irradiation amount of the first area 41 will be equal to the standard irradiation amount. The output power values of the second area 42 to the fifth area 45 are all weaker than that of the first area 41, so the gains of the second area 42 to the fifth area 45 will all be larger than "1" and the compensated irradiation amounts of the second area 42 to the fifth area 45 will be all higher than the standard irradiation amount. It can be seen from FIG. 4 that the weaker the output power value obtained by an area, the larger the gain will be needed by the area, and also the higher the compensated irradiation amount will be calculated for the area as well. In other word, the compensated irradiation amount of each area may all be different, and the compensated irradiation amount of each area will be inversely proportional to the output power value obtained by each area.

In one embodiment, the processor 10 is calculating the gain needed by each of the areas 41-45 through a first formula:

$$\text{gain} = \frac{output\ power\ value\ of\ the\ working\ area}{output\ power\ value\ of\ the\ area}$$

In the above first formula, the gain is larger than or equal to "1".

Furthermore, the processor 10 is to multiply the standard irradiation amount by one area's gain for calculating a product value, and regards the product value as the compensated irradiation amount of this area. For example, the processor 10 may multiply the standard irradiation amount by the gain of the first area 41 for calculating a first product value and regards the first product value as the compensated irradiation amount of the first area 41, may multiply the standard irradiation amount by the gain of the second area 42 for calculating a second product value and regards the second product value as the compensated irradiation amount of the second area 42, and so on.

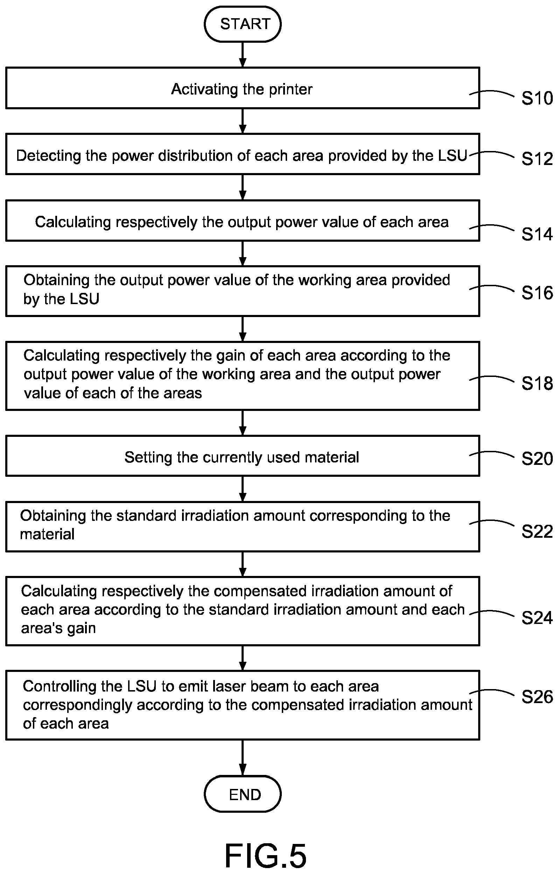

FIG. 5 is a printing flowchart of the present invention. The present invention further discloses a printing method with light source compensation (referred to as the printing method hereinafter), the printing method is adopted by the printer 1 shown in FIG. 1 to FIG. 3. However, the printing method of the present invention may be adopted by any kind of SLA-type 3D printers which arranged with a laser scanning unit thereon, not only limited to what is shown in FIG. 1, FIG. 2 and FIG. 3.

For the sake of description, the following paragraphs will be interpreted based on the printer 1 shown in FIG. 1 to FIG. 3.

First, a user activates the printer 1 (step S10). Next, the printer 1 may control the power detecting unit 14 to detect the power distribution of each area upon the printing platform 12 provided by the LSU 13 (step S12), and then calculates the output power value of each area (step S14).

Next, the processor 10 confirms and obtains the output power value of the working area provided by the LSU 13 (step S16), and calculates the gain of each area according to the output power value of the working area and the output power value of each of the areas (step S18). In this embodiment, the processor 10 uses the following formula to respectively calculate the gains needed by the areas:

$$\text{gain} = \frac{output\ power\ value\ of\ the\ working\ area}{output\ power\ value\ of\ the\ area}$$

In the above formula, the gain is larger than or equal to "1".

Next, the processor 10 sets the material currently used by the printer 1 (step S20), and further obtains the standard irradiation amount corresponding to the currently used material (step S22).

As shown in FIG. 2, the printer 1 of the present disclosure further includes a memory unit 15 electrically connected with the processor 10. The memory unit 15 pre-stores an irradiation amount lookup table 151, which records multiple information of the standard irradiation amount respectively corresponding to different materials. In the step S22 set forth, the processor 10 inquiries the irradiation amount lookup table 151 according to the currently used material, so as to obtain the standard irradiation amount corresponding to the currently used material.

In this embodiment, the manufacturer of the printer 1 may test different kinds of material having different characteristics on the printer 1, so as to obtain the necessary irradiation amount of the LSU 13 on the printer 1 for curing each kind of material (without causing an over curing effect), and records the necessary irradiation amount in the irradiation amount lookup table 151. Therefore, once the currently used material is recorded in the irradiation amount lookup table 151, the printer 1 is capable of obtaining the standard irradiation amount corresponding to the currently used material directly from the irradiation amount lookup table 151 without performing additional tests, which is very convenient.

It is worth saying that the printer 1 of the present disclosure may further include a human machine interface 16 electrically connected with the processor 10 (as shown in FIG. 2). In one embodiment, the printer 1 may accept external operations from the user through the human machine interface 16 in the step S20, so as to set the currently used material according to the external operations.

In particular, the user may pour the material 2 used for this printing procedure in the tank 11, and operates the human machine interface 16 (such as pressing the buttons, touchscreen, etc.) for setting the currently used material 2 to the processor 10. In another embodiment, a sensor may be arranged in the tank 11 (not shown), which may automatically sense the type of material 2 contained in the tank 11 and replies the type of the material 2 to the processor 10. However, the above descriptions are only exemplary embodiments of the present invention, not intended to limit the scope of the present invention.

After obtaining the standard irradiation amount and each area's gain, the processor 10 then calculates the compensated irradiation amount of each area according to the standard irradiation amount and each area's gain (step S24). In particular, the processor 10 in the step S24 is to multiply the standard irradiation amount by the gain of each area for calculating a product value for each area, and regards each product value as each area's compensated irradiation amount, i.e., the compensated irradiation amount of an area = the standard irradiation amount x the gain of this area.

After obtaining each area's compensated irradiation amount, the processor 10 may control the LSU 13 to emit laser beam to each corresponding area of the printing platform 12 according to the compensated irradiation amount of each area (step S26), so as to print a corresponding slicing object on the printing platform 12.

It should be mentioned that the power distribution of each area provided by the LSU 13 can be ensured after it is manufactured, so the step S12 to step S18 discussed above can also be pre-executed during the manufacturing procedure of the printer 1, so as to pre-align the LSU 13 during manufacturing the printer 1.

As discussed, the manufacturer of the printer 1 may detect the power distribution of each area upon the printing platform 12 provided by the LSU 13 for calculating each area's gain during manufacturing, and pre-stores the gains in the memory unit 15. When performing printing, the processor 10 of the printer 1 may obtain the gains directly from the memory unit 15 for instantly calculating the compensated irradiation amount of each area, so the overall printing speed of the printer 1 is effectively increased. Besides, the printer 1 in this embodiment is unnecessary to arrange with the power detecting unit 14, so the manufacturing cost of the printer 1 can be reduced.

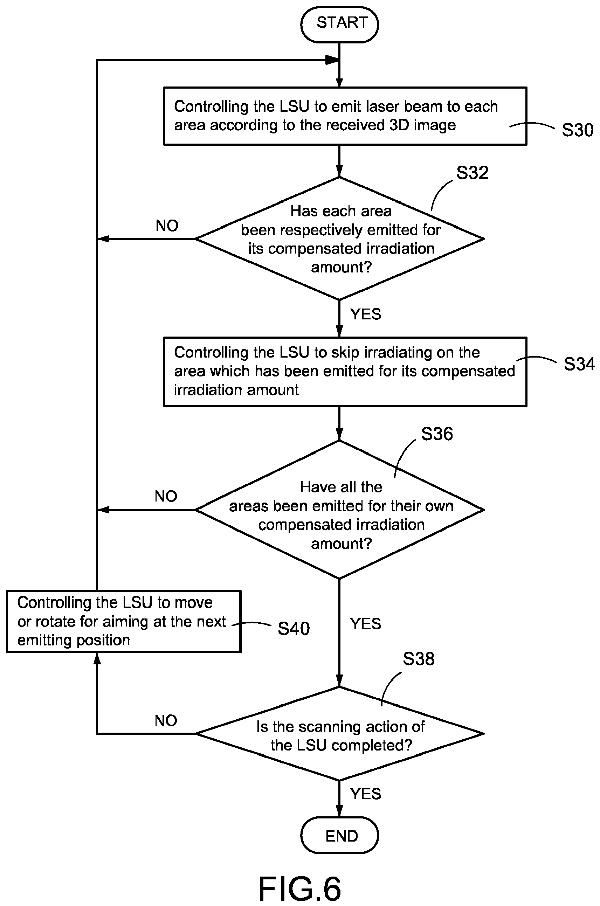

FIG. 6 is a laser emitting flowchart of the present invention. FIG. 6 is further describing the step S26 set forth in FIG. 5, so as to detail how the LSU 13 performs its scanning action.

After obtaining the compensated irradiation amount of each area, the processor 10 starts performing the printing procedure. In the printing procedure, the processor 10 receives 3D image generated after the slicing process, and then controls the LSU 13 to emit laser beam to each area upon the printing platform 12 according to the received 3D image (step S30). In particular, the processor 10 in the step S30 is controlling the laser light source 131 of the LSU 13 to continually emit laser beam toward the galvanometer 132, and the processor 10 in the step S30 also controls the rotation of the galvanometer 132, so the laser beam may be refracted and hit each of the areas upon the printing platform 12 by way of the line-light-source.

The aforementioned slicing process is the common technical solution in 3D printing field, whereby each of the 3D images generated will respectively correspond to the shape of one layer of the slicing objects.

The processor 10 keeps determining whether each area has respectively been emitted for its compensated irradiation amount during the emitting procedure of the LSU 13 (step S32). If these areas have not yet been emitted respectively for their own compensated irradiation amount, the processor 10 goes back to the step S30 for controlling the LSU 13 to keep emitting laser beam. Once the processor 10 determines that one of the areas has been emitted for its compensated irradiation amount, the processor 10 may control the LSU 13 to skip irradiating on this area (step S34), for example, the processor 10 may control the laser light source 131 to skip emitting laser beam when the galvanometer 132 is rotated to a specific angle corresponding to this area, so as to prevent this area from being emitted directly by the galvanometer-refracted laser beam.

Next, the processor 10 determines whether all the areas upon this line (i.e., the line-light-source) have all been emitted for their own compensated irradiation amount (step S36). In this embodiment, the processor 10 may re-execute the step S30 to the step S34 until all areas upon this line are all being emitted for their own compensated irradiation amount, therefore, the material 2 upon each of the areas may all be completely cured.

When determining that all of the areas are being emitted for their own compensated irradiation amount, the processor 10 further determines whether the scanning action of the LSU 13 is completed (step S38), i.e., the processor 10 determines whether the slicing object corresponding to the 3D image is printed completely. If the scanning action is not completed yet, the processor 10 controls the LSU 13 to move or rotate for aiming at the next emitting position (step S40), and re-executes the step S30 to the step S38. Therefore, the printer 1 may print the slicing object corresponding to the 3D image by way of the scanning action implemented by the LSU 13.

After the aforementioned slicing object is printed completely, the processor 10 obtains the next 3D image and controls the printing platform 12 to change its height upon a Z axis of the printer 1, and then controls the LSU 13 to again perform the scanning action for the next slicing object, and so on.

The present printer and printing method may solve the problem that each area upon the printing platform may have different degrees of power provided from the LSU, so the accurate of the printed 3D objects will be increased. Besides, the present printer and printing method may compensate the insufficient power respectively obtained by each of the areas, so as to appropriately expand the effective irradiating range of the laser scanning unit of the 3D printer.

**Claims**

1.  An SLA-type 3D printer (1), comprising:

    a tank (11), configured to contain a material (2);
    a printing platform (12), being controlled to be immersed into the material (2) and logically divided into multiple areas (41-45);
    a laser scanning unit (13), arranged upon the tank (11), configured to provide a line-light-source for irradiating on the multiple areas (41-45) upon the printing platform (12);
    a power detecting unit (14), configured to detect an output power value (Px1-Px5) of each of the areas (41-45) provided by the laser scanning unit (13); and

a processor (10) electrically connected with the printing platform (10), the laser scanning unit (13) and the power detecting unit (14), configured to calculate a gain of each area (41-45) according to the output power value of a working area of each of the multiple areas (41-45) and the output power value of multiple extending areas around the working area of the multiple areas (41-45), to obtain a standard irradiation amount corresponding to the material (2), and to calculate a compensated irradiation amount of each area (41-45) according to the standard irradiation amount and each area's gain;

wherein, the processor (10) is configured to control the laser scanning unit (13) to irradiate on each of the areas (41-45) upon the printing platform (12) according to the compensated irradiation amount of each area (41-45) for curing the material (2) and transforming the material (2) into a corresponding slicing object (3).

2. The SLA-type 3D printer (1) in claim 1, further comprising a memory unit (15) electrically connected with the processor (10), the memory unit (15) is configured to store an irradiation amount lookup table (151), a plurality of information of the standard irradiation amount respectively corresponding to different types of material (2) are recorded in the irradiation amount lookup table (151).

3. The SLA-type 3D printer (1) in claim 1, further comprises a human machine interface (16) electrically connected with the processor (10), the human machine interface (16) is configured to accept an external operation for setting the material (2) currently used by the printer (1) to the processor (10).

4. The SLA-type 3D printer (1) in claim 1, wherein each gain of each area is calculated by:

$$\frac{output\ power\ value\ of\ the\ working\ area}{output\ power\ value\ of\ the\ area},$$ wherein the gain is larger than or equal to 1.

5. The SLA-type 3D printer (1) in claim 4, wherein the processor (10) is configured to multiply the standard irradiation amount by the gain of each area (41-45) for calculating a product value of each area (41-45), and regards each product value as the compensated irradiation amount of each area (41-45).

6. A printing method with light source compensation, adopted by an SLA-type 3D printer (1) having a processor (10), a tank (11) for containing a material (2), a printing platform (12) being logically divided into multiple areas (41-45) and a laser scanning unit (13) for providing a line-light-source to irradiate on the multiple areas (41-45) upon the printing platform (12), the printing method comprising following steps:

a) detecting an output power value of each of the areas (41-45) upon the printing platform (12) provided by the laser scanning unit (13);
b) calculating a gain of each area (41-45) according to the output power value of a working area of each of the multiple areas (41-45) and the output power values of multiple extending areas around the working area of the multiple areas (41-45) by the processor (10);
c) obtaining a standard irradiation amount corresponding to the material (2);
d) calculating a compensated irradiation amount of each area (41-45) according to the standard irradiation amount and the gain of each area (41-45) by the processor (10); and
e) controlling the laser scanning unit (13) to irradiate on each of the areas (41-45) upon the printing platform (12) according to each area's compensated irradiation amount by the processor (10) for curing the material (2) and transforming the material (2) into a corresponding slicing object.

7. The printing method in claim 6, wherein the SLA-type 3D printer (1) further comprises a human machine interface (16), the step c) is to accept an external operation through the human machine interface (16) for setting the material (2) to the processor (10) and obtaining the standard irradiation amount corresponding to the set material (2).

8. The printing method in claim 7, wherein the SLA-type 3D printer (1) further comprises a memory unit (15), the memory unit (15) is configured to store an irradiation amount lookup table (151), a plurality of information of the standard irradiation amount respectively corresponding to different types of material (2) are recorded in the irradiation amount lookup table (151), the step c) is to inquiry the irradiation amount lookup table according to the set material (2) for obtaining the standard irradiation amount corresponding to the set material (2).

9. The printing method in claim 6, wherein the step b) is to calculate the gain of each area (41-45) according to a first

formula: gain = $\dfrac{output\ power\ value\ of\ the\ working\ area}{output\ power\ value\ of\ the\ area}$, wherein each gain is larger than or equal to 1; the step d) is to multiply the standard irradiation amount by the gain of each area (41-45) for calculating a product value of each area (41-45), and regards each product value as the compensated irradiation amount of each area (41-45).

**10.** The printing method in claim 6, wherein the step e) comprises following steps:

e1) controlling the laser scanning unit (13) to correspondingly irradiate each of the areas (41-45) according to a received 3D image by the processor (10);
e2) determining whether each of the areas (41-45) is being emitted for the compensated irradiation amount of each area (41-45);
e3) controlling the laser scanning unit (13) to skip irradiating a specific area of the multiple areas (41-45) when the specific area has already been emitted for its compensated irradiation amount; and
e4) re-executing the step e1) to the step e3) before all the areas (41-45) are being emitted for their own compensated irradiation amount.

FIG.1

FIG.2

FIG.3

FIG.4

START

| Activating the printer | ~ S10 |

| Detecting the power distribution of each area provided by the LSU | ~ S12 |

| Calculating respectively the output power value of each area | ~ S14 |

| Obtaining the output power value of the working area provided by the LSU | ~ S16 |

| Calculating respectively the gain of each area according to the output power value of the working area and the output power value of each of the areas | ~ S18 |

| Setting the currently used material | ~ S20 |

| Obtaining the standard irradiation amount corresponding to the material | ~ S22 |

| Calculating respectively the compensated irradiation amount of each area according to the standard irradiation amount and each area's gain | ~ S24 |

| Controlling the LSU to emit laser beam to each area correspondingly according to the compensated irradiation amount of each area | ~ S26 |

END

FIG.5

START

Controlling the LSU to emit laser beam to each area according to the received 3D image — S30

S32
Has each area been respectively emitted for its compensated irradiation amount?

NO

YES

Controlling the LSU to skip irradiating on the area which has been emitted for its compensated irradiation amount — S34

S36
Have all the areas been emitted for their own compensated irradiation amount?

NO

YES

Controlling the LSU to move or rotate for aiming at the next emitting position — S40

S38
Is the scanning action of the LSU completed?

NO

YES

END

FIG.6

Europäisches
Patentamt

European
Patent Office

Office européen
des brevets

# EUROPEAN SEARCH REPORT

Application Number

EP 18 19 9478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/154160 A1 (COOPER GUTHRIE [US]) 20 June 2013 (2013-06-20) | 1,4-6,9,10 | INV. B29C64/135 B29C64/393 B29C64/124 B33Y10/00 B33Y50/02 |
| Y | * paragraphs [0077] - [0084] * | 2,3,7,8 | |
| X | US 2017/326798 A1 (CHOI BYOUNG-CHAN [KR] ET AL) 16 November 2017 (2017-11-16) * paragraphs [0007], [0022], [0063], [0100] * | 1,4-6,9,10 | |
| X | US 2018/186066 A1 (COOPER GUTHRIE [US]) 5 July 2018 (2018-07-05) * paragraphs [0013] - [0015], [0026] - [0056] * | 1,4-6,9,10 | |
| Y | US 2018/194080 A1 (EL-SIBLANI ALI [US] ET AL) 12 July 2018 (2018-07-12) * paragraph [0113] * | 2,3,7,8 | |

| | |
|---|---|
| | TECHNICAL FIELDS SEARCHED (IPC) |
| | B29C B33Y |

The present search report has been drawn up for all claims

| Place of search | Date of completion of the search | Examiner |
|---|---|---|
| The Hague | 4 April 2019 | Zattoni, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 19 9478

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2019

| Patent document cited in search report | | Publication date | Patent family member(s) | | Publication date |
|---|---|---|---|---|---|
| US 2013154160 | A1 | 20-06-2013 | NONE | | |
| US 2017326798 | A1 | 16-11-2017 | CN | 107112710 A | 29-08-2017 |
| | | | KR | 20160057568 A | 24-05-2016 |
| | | | US | 2017326798 A1 | 16-11-2017 |
| | | | WO | 2016076486 A1 | 19-05-2016 |
| US 2018186066 | A1 | 05-07-2018 | US | 2018186066 A1 | 05-07-2018 |
| | | | WO | 2018125596 A1 | 05-07-2018 |
| US 2018194080 | A1 | 12-07-2018 | US | 2018194080 A1 | 12-07-2018 |
| | | | WO | 2018132520 A1 | 19-07-2018 |

EPO FORM P0459

For more details about this annex : see Official Journal of the European Patent Office, No. 12/82